# EUROPÄISCHE PATENTANMELDUNG

(11) **EP 2 031 141 A1**
(43) Veröffentlichungstag der Anmeldung: **04.03.2009**
(21) Anmeldenummer: 08405204.2
(22) Anmeldetag: 26.08.2008
(51) Int. Cl.: E04B 1/68

(54) **Klebeband**

(30) Priorität: 28.08.2007 CH 13472007
(71) Anmelder: Ampack AG, 9404 Rorschacherberg (CH)
(72) Erfinder: Höing, Ulrich, 9244 Niederuzwil (CH); Deschwanden, Andreas Beat, 9404 Rorschacherberg (CH)
(74) Vertreter: Wagner, Kathrin

(57) **Zusammenfassung**

Ein selbstklebendes Klebeband ist in mindestens zwei in Längsrichtung parallel zueinander verlaufende Längsstreifen (1, 2) unterteilt. Dabei weist ein erster dieser Längsstreifen (1) eine grössere Dehnbarkeit auf als ein zweiter dieser Längsstreifen (2). Vorzugsweise ist zwischen den zwei Längsstreifen eine klebefreie Längszone (5, 7) vorhanden. Das erfindungsgemässe Klebeband ist dank seinen zwei unterschiedlich dehnbaren Längsstreifen insbesondere zum Abkleben, Verschliessen oder Abdichten von Spalten und Fugen, in Eckbereichen und Durchdringungen im Hausbau, geeignet. Es gewährleistet eine hohe Dichtheit, ist einfach montierbar und kostengünstig herstellbar.

## Beschreibung

### Technisches Gebiet

Die Erfindung betrifft ein selbstklebendes Klebeband gemäss Oberbegriff des Patentanspruchs 1.

### Stand der Technik

Ein- oder zweiseitig selbstklebende Klebebänder werden im Hausbau zur Überbrückung bzw. zum Verschliessen oder Abdichten von Fugen zwischen zwei Bauteilen verwendet. Genauso vielfältig wie ihre Anwendungsbereiche sind auch die diversen Ausgestaltungsformen der auf dem Markt bekannten Klebebänder.

Bewährt hat sich ein Klebeband, wie es beispielsweise in EP 1 120 502 offenbart ist. Dieses Klebeband weist ein bandförmiges Trägermaterial mit einem über seine ganze Breite aufgebrachten Kleber auf. Auf dem Kleber ist ein mittlerer Längsbereich mit einer nicht entfernbaren Abdeckung bzw. einem fest haftenden Liner und beidseitig dieses mittleren Liners mit zwei abziehbaren Abdeckungen versehen. Dadurch ist ein mittlerer Bereich der Klebebandes als klebfreie Zone ausgebildet. Das Klebeband wird nun so verlegt, dass diese Zone über die Fuge zu liegen kommt. Dadurch werden geringfügige Relativbewegungen zwischen den zwei Bauteilen in allen drei Raumdimensionen vom Klebeband aufgenommen, ohne dass dieses Risse oder Falten bildet. Zudem hat das Klebeband in diesem Bereich eine grössere Dichtigkeit als herkömmliche Klebebänder.

Eine Weiterentwicklung ist in EP 1 748 116 beschrieben. Hier ist das Klebeband mindestens teilweise durchsichtig oder durchscheinend ausgebildet, wobei das Trägermaterial oder der Kleber durch ein Gitter verstärkt sind.

Ferner ist aus EP 1 785 460 ein Klebeband bekannt, welches einen gefalteten Mittelbereich aufweist. Dieser dient als Dehnungsreserve, um variierende Breiten der Fugen zu kompensieren.

DE 20 2005 004 044 U offenbart ein Klebeband, welches auch bei ausgeprägten Bewegungen zwischen den Bauteilen eine zuverlässige Abdichtung gewährleisten soll. Dieses Klebeband weist zwei in Längsrichtung parallel zueinander verlaufende und miteinander verklebte Folien mit je einer Aluminiumkaschierung auf. Die Verklebung der zwei Folien weist dabei eine elastische Verformbarkeit von mindestens 60% auf. Die Folien sind an ihren nicht miteinander verklebten Längskanten mit einem Kleber versehen, wobei der eine Randkleber längselastisch ist. Die elastische mittlere Verklebung und der längselastische Randkleber sollen die Bewegungen der Bauteile kompensieren.

Es gibt auf dem Markt noch andere Kleber, welche Dilatationen ohne Risse und Schwächung der Abdichtung kompensieren sollen. Schwieriger ist es jedoch, Durchdringungen abzudichten, da hier die Abdichtung manschettenartig sein muss. Es gibt zwar auf dem Bau einige Lösungen hierfür, diese sind jedoch oft suboptimal.

Zum einen werden normale Klebebänder verwendet, wobei diese soweit wie möglich gestreckt werden müssen und die entstehenden Falten in Kauf genommen werden. Nachteilig ist zudem, dass das überdehnte Material zur Rückstellung neigt und sich dadurch wieder von der Klebefläche lösen kann.

Des weiteren werden Gummimanschetten zur Abdichtung dieser Durchdringungen verwendet. Diese Manschetten sind jedoch relativ teuer und weisen den Nachteil auf, dass sie nicht immer den richtigen Aussen- und Innendurchmesser für die entsprechende Durchdringung aufweisen.

Ferner gibt es Klebebänder, welche hochdehnbar ausgebildet sind, so dass sie von Hand gestreckt werden können. Diese Bänder werden von Hand gefaltet, ein Längsstreifen wird um das Rohr der Durchdringung gewickelt und der noch nicht verklebte andere Längsstreifen wird anschliessend gedehnt, so dass er schürzenartig auf die durchdrungene Bauplatte geklebt werden kann. Nachteilig ist hier, dass der erste schon verklebte Bereich sich mitdehnt. Ferner ist der mittlere Bereich, welcher über die Fuge zu liegen kommt, ebenfalls klebend ausgebildet. Deshalb wird gerade dieser Bereich durch die Dehnung und Abwinklung am meisten geschwächt. Es können im schlimmsten Fall Löcher entstehen oder zumindest die Dichtung nicht genügend gewährleistet werden.

### Darstellung der Erfindung

Es ist deshalb eine Aufgabe der Erfindung, ein Klebeband zu schaffen, welches insbesondere bei Durchdringungen eine genügende Dichtung gewährleistet.

Diese Aufgabe löst ein Klebeband mit den Merkmalen des Patentanspruchs 1.

Das erfindungsgemässe selbstklebende Klebeband ist in mindestens zwei in Längsrichtung parallel zueinander verlaufende Längsstreifen unterteilt, wobei ein erster dieser Längsstreifen eine grössere Dehnbarkeit aufweist als ein zweiter dieser Längsstreifen. Vorzugsweise weist der Längsstreifen insbesondere in Längsrichtung des Klebebandes eine grössere Dehnbarkeit auf.

Dadurch ein Streifen dehnen und der andere Streifen bleibt relativ fix. Falten lassen sich vermeiden, das Band kann an beliebige Formen angepasst werden und die Gefahr, dass das Band in kritischen Bereichen überdehnt oder zerrissen wird, ist minimiert. Des weiteren werden Rückstellungen vermieden, so dass das Band sich nicht selber lösen kann.

Vorteilhaft ist ferner, dass sich die Herstellungskosten senken lassen, da nur ein Teil des Bandes aus einem teuren dehnbaren Material gefertigt sein muss und der andere Teil aus einem kostengünstigen nicht oder nur schwach dehnbaren Material bestehen kann. Die Dehnbarkeit des ersten Längsstreifens ist vorzugsweise um ein Vielfaches grösser als diejenige des zweiten Längsstreifens. Der zweite Längsstreifen ist vorzugsweise nicht oder nur schwach dehnbar ausgebildet. Vorzugsweise weist dieser zweite Längsstreifen ein Vlies auf. Der erste Längsstreifen weist vorzugsweise Butyl auf. Er ist vorzugsweise nicht nur hoch dehnbar sondern hochelastisch ausgebildet. Der zweite Längsstreifen kann gleichmässig und plan ausgebildet sein. In einer anderen Ausführungsform ist er jedoch mit Dehnungsreserven versehen, vorzugsweise ist er gekreppt ausgebildet. Diese Dehnungsreserve, insbesondere die Kreppung, verhindert dabei eine Rückstellung des ersten Längsstreifens.

Dieses Klebeband lässt sich falten, so dass der erste Längsstreifen auf einer ersten Seite und der zweite Längsstreifen auf der anderen Seite des gefalteten Bandes zu liegen kommt. Das so gefaltete Klebeband lässt sich nun zuerst mit seinem zweiten, kaum oder nicht dehnbaren Längsstreifen um das durchdringende Bauteil, z.B. ein Rohr, wickeln. Dieser Streifen bleibt auch nachfolgend stabil und wird nicht oder kaum gedehnt. Der erste noch nicht verklebte Längsstreifen lässt sich nun genügend strecken, um möglichst ohne Falten, Risse oder Schwachstellen auf das durchdrungene Bauteil, z.B. eine Platte geklebt zu werden. Die Montage ist somit einfach und die Dichtung gewährleistet.

Weist das Klebeband zwischen den zwei Längsstreifen noch eine klebefreie Längszone auf, so sind auch die oben genannten Vorteile der Aufnahme der Bauteilbewegungen und der erhöhten Dichtheit gewährleistet.

Die zwei klebenden Längsstreifen verlaufen vorzugsweise teilweise überlappend, aneinander angrenzend oder beabstandet zueinander.

Das Klebeband ist vorzugsweise einseitig mit einer Klebeschicht versehen. Es kann jedoch auch doppelseitig klebend ausgebildet sein. Die Klebeschicht kann sich über die gesamte Breite und Länge des Klebebandes erstrecken. In einer bevorzugten Ausführungsform ist jedoch ein Längsbereich zwischen den Längsstreifen als klebefreie Zone ausgebildet.

In einer bevorzugten Ausführungsform ist ein erster Träger und ein zweiter Träger vorhanden, welche vorzugsweise in Längsrichtung überlappend angeordnet und in diesem Überlappungsbereich miteinander verbunden sind. Insbesondere sind sie verklebt oder verschweisst. Die Träger können jedoch alternativ oder zusätzlich auf einem gemeinsamen durchgehenden Basisträger angeordnet sein, welcher ebenfalls eine grössere Dehnbarkeit aufweist als der zweite Träger.

In einer weiteren bevorzugten Ausführungsform weist das Klebeband einen Kleber auf, welcher mindestens in einen ersten und einen zweiten, in Längsrichtung parallel zueinander und auf derselben Seite des Klebebandes verlaufende Längsklebestreifen unterteilt ist, wobei die zwei Längsklebestreifen unterschiedliche Klebereigenschaften aufweisen. Dadurch wird eine optimale Verklebung mit den Bauteilen erhalten, da die Kleber für das jeweilige Bauteil optimiert sein können.

Die oben genannten Ausführungsformen lassen sich auch zu weiteren Ausführungsformen kombinieren.

Diese Klebebänder eignen sich insbesondere zum Abkleben, Verschliessen bzw. Abdichten von Spalten und Fugen, in Eckbereichen und insbesondere bei Durchdringungen im Hausbau. Die Durchdringungen können dabei eine beliebige Form aufweisen. Sie können insbesondere rund oder eckig ausgebildet sein.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1: eine schematische Darstellung eines Querschnitts durch ein Klebe- band gemäss einer ersten Ausführungsform der Erfindung;
- Figur 2: ein Klebeband gemäss einer zweiten Ausführungsform der Erfindung;
- Figur 3: ein Klebeband gemäss einer dritten Ausführungsform der Erfindung;
- Figur 4: ein Klebeband gemäss einer vierten Ausführungsform der Erfindung;
- Figur 5: das Klebeband gemäss Figur 3 in einer Anwendung auf dem Bau;
- Figur 6: ein Klebeband gemäss einer fünften Ausführungsform der Erfindung kurz nach der Herstellung;
- Figur 7: das Klebeband gemäss Figur 6 im vorgefalteten Zustand und
- Figur 8: das Klebeband gemäss Figur 6 in einer Anwendung als Durchfüh- rungsabdichtung.

### Wege zur Ausführung der Erfindung

In den Figuren sind alle Schichten des Klebebandes zur besseren Erkennung übermässig dick dargestellt. Des weiteren weisen alle dieselbe Dicke auf, was rein schematisch zu verstehen ist und nicht der Praxis entspricht. Das erfindungsgemässe Klebeband weist die im Stand der Technik üblichen Dicken, Breiten und Schichtdicken auf.

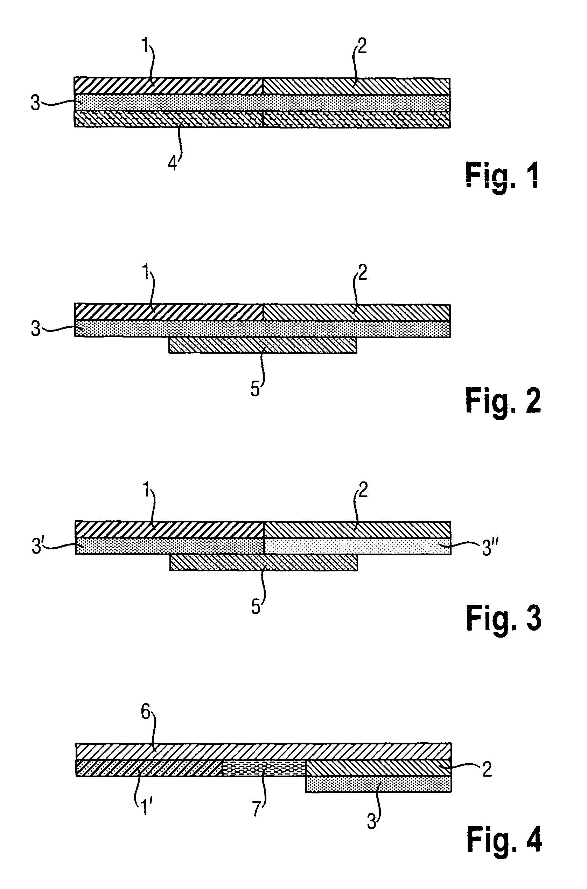

In Figur 1 ist ein erstes Ausführungsbeispiel des erfindungsgemässen Klebebandes dargestellt. Es weist einen ersten Träger 1 und einen in Längsrichtung parallel zum ersten Träger 1 verlaufenden zweiten Träger 2 auf. Die zwei Träger 1, 2 sind aneinander anstossend dargestellt. Üblicherweise überlappen sie sich jedoch in einem kleinen Teilbereich über ihre gesamte Länge, wobei sie in diesem Teilbereich miteinander verbunden, insbesondere verklebt oder verschweisst sind. Die zwei Träger 1, 2 können, müssen aber nicht gleiche breit ausgebildet sein.

Der erste Träger 1 besteht aus einem Material mit relativ hoher Dehnbarkeit, wobei es vorzugsweise mindestens in Längsrichtung hoch dehnbar ist. Vorzugsweise ist das Material sogar hochelastisch. Die Dehnbarkeit beträgt üblicherweise mindestens 10% und typischerweise 300%. Der erste Träger ist vorzugsweise aus Polyethylen (PE) hergestellt.

Der zweite Träger 2 ist aus einem Material gebildet, welches kaum oder nicht dehnbar ist. Er weist eine Dehnbarkeit von typischerweise maximal 10% auf. Vorzugsweise ist er ein Vlies oder mit einem Vlies versehen. Er kann aber auch beispielsweise aus Papier, Gewebe oder Alufolie gefertigt sein.

Die zwei Träger 1, 2 sind über ihre gesamte Breite mit einer gemeinsamen Klebeschicht versehen. Dieser Kleber 3 ist vorzugsweise nur auf einer Seite der Träger 1, 2 angeordnet. Er besteht beispielsweise aus Acrylaten oder Butylen und beeinträchtigt die grosse Längsdehnbarkeit des ersten Trägers 1 nicht oder nur unwesentlich. Dadurch ist der durch Träger 1 und Kleber 3 in diesem Bereich gebildete erste Längsstreifen mit einer grösseren Dehnbarkeit versehen als der zweite Längsstreifen, welcher durch den zweiten Träger 2 und den Kleber 3 in diesem Bereich gebildet ist.

Der Kleber 3 kann zusätzlich noch mit einer von Hand entfernbaren bzw. abziehbaren Abdeckung 4 versehen sein. Diese muss nicht dehnbar sein, da sie ja vor Gebrauch des Klebebandes entfernt wird. Typischerweise ist sie ein Papier- oder Kunststoffliner. Die Abdeckung 4 ist vorzugsweise in Längsrichtung zweigeteilt, wobei ihre Teilung derjenigen des ersten und zweiten Längsstreifens entspricht. Dadurch können die zwei Längsstreifen einzeln und unabhängig voneinander verklebt werden, ohne dass beim anderen Längsstreifen bereits die Klebefläche freigelegt werden muss. Die Streifen der Abdeckung 4 können aneinander angrenzen oder vorzugsweise einander überlappen.

Dieses und auch die nachfolgend beschriebenen Klebebänder sind vorzugsweise auf einer Rolle aufgerollt und werden bei Gebrauch abgewickelt. Dabei können sie ausgebreitet oder in einem vorgefalteten Zustand aufgerollt sein. Bei einer Faltung ist vorzugsweise der eine Schenkel durch den ersten Längsstreifen und der zweite Schenkel der Faltung durch den zweiten Längsstreifen gebildet.

In Figur 2 ist ein zweites Ausführungsbeispiel dargestellt. Der Grundaufbau ist derselbe wie im Beispiel gemäss Figur 1. Zusätzlich ist nun jedoch noch eine nicht klebende, fest an mindestens einen der Träger 1, 2 klebende Abdeckung 5 vorhanden, welche sich über einen Teil der Breite des Klebebandes und über die gesamte Länge desselben erstreckt. Vorzugsweise ist die Abdeckung 5 so angeordnet, dass der erste Längsstreifen auf einer Seite und der zweite Längsstreifen auf der anderen Seite liegt. Die Abdeckung 5 kann, muss aber nicht mittig angeordnet sein. Die abziehbare Abdeckung 4 ist hier nicht gezeichnet. Sie kann sich über den Kleber 3 und nun die Abdeckung 5 und einstückig über die gesamte Breite erstrecken. Sie kann jedoch auch zweigeteilt sein und auf beiden Seiten der Abdeckung 5, deren Ränder beispielsweise noch überlappend, angeordnet sein. Die Abdeckung 5 selber kann auch mit einem weiteren, hier nicht dargestellten Liner, geschützt sein, welcher die Abdeckung 5 beidseitig überlappt und auf dem Kleber 3 aufliegt.

Diese Abdeckung 5 bildet eine klebefreie Längszone zwischen den zwei klebenden Längsstreifen und kommt bei der Montage auf die zu überbrückende Fuge zu liegen. Sie kann mit einer gedruckten Mittellinie versehen sein und das Klebeband kann mindestens in diesem Bereich durchsichtig oder durchscheinend ausgebildet sein, damit die Mittellinie und die Fuge erkennbar sind.

In Figur 3 ist ein weiteres Ausführungsbeispiel dargestellt. Hier ist die Klebeschicht zweigeteilt. Der erste Träger 1 ist mit einem ersten Kleber 3' versehen und der zweite Kleber 2 mit einem zweiten Kleber 3 ". Diese Kleber 3', 3" sind jeweils auf die zu verklebenden Baumaterialien optimiert. Beispielsweise ist Kleber 3' Acrylat und zur Verklebung von Kunststoffen geeignet und Kleber 3" besteht aus Butyl und dient zur Verklebung von mineralischen, rauen Oberflächen. Auch hier ist vorzugsweise wieder eine von Hand entfernbare Abdeckung vorhanden, welche wie bereits oben beschrieben ein-oder mehrteilig, neben einander liegend, beabstandet oder überlappend angeordnet sein kann.

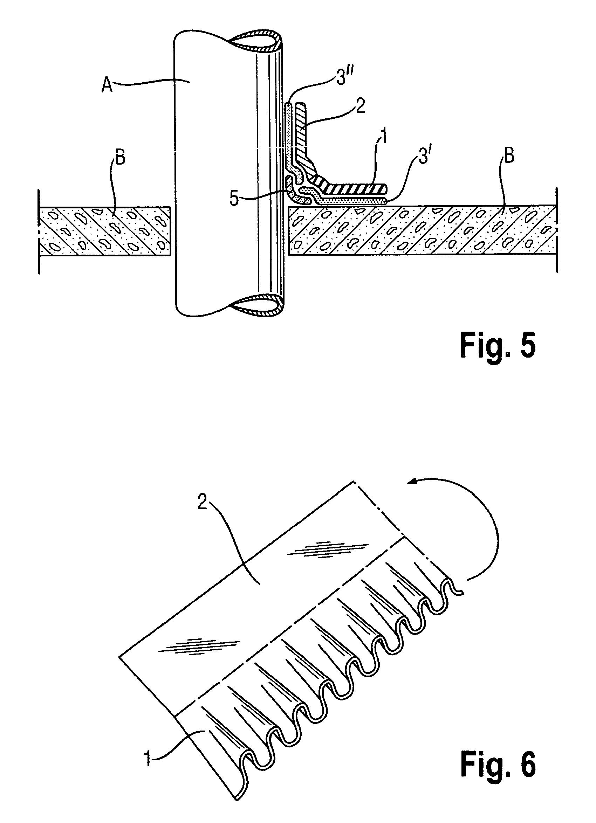

Eine Anwendung eines derartigen Klebebandes ist in Figur 5 erkennbar. Die Figur zeigt eine Durchdringung, bei welchem in einem Bauwerk ein Stahlrohr eine Betonbodenplatte durchdringt. Wie erkennbar ist, klebt nun der erste Längsstreifen mit dem ersten Träger 1 und erstem Kleber 3' auf der Bodenplatte und der zweite Längsstreifen mit dem zweiten Träger 2 und dem zweiten Kleber 3" auf dem Rohr. Die Verklebung erfolgte vorzugsweise, indem das Klebeband in Längsrichtung im Bereich der klebefreien Zone 5 gefaltet wurde, der Liner bzw. die entfernbare Schutzabdeckung 4 vom zweiten Längsstreifen entfernt und dieser Längsstreifen um das Rohr gewickelt wurde. Anschliessend wurde der Liner vom ersten Längsstreifen entfernt, dieser nach unten zur Bodenplatte gebogen, soweit gedehnt, bis er sich über den gesamten Umfang des Rohrs manschetten- oder schürzenartig auf dem Boden zu liegen kam und in dieser Lage angeklebt wurde. Dadurch kommt die klebefreie Zone 5 in den Bereich der Fuge zu liegen. Dieselbe Montageart empfiehlt sich auch für die anderen hier beschriebenen erfindungsgemässen Klebebänder.

Im Ausführungsbeispiel gemäss Figur 4 ist ein gemeinsamer Basisträger 6 vorhanden. Dieser besteht vorzugsweise aus Polyethylen (PE). Er weist eine hohe Dehnbarkeit auf, insbesondere in Längsrichtung des Klebebandes. Die Dehnbarkeit beträgt typischerweise 300%.

Auf diesem Basisträger 6 sind nun beabstandet voneinander der erste, hoch dehnbare Träger 1 und der zweite kaum dehnbare Träger 2 angeordnet. Ist der erste Träger 1' aus Butyl oder einem anderen geeigneten Kleber gebildet, so ist keine weitere Klebeschicht mehr notwendig. Andernfalls ist er noch mit einer Klebeschicht versehen. Dasselbe gilt für den zweiten Träger 2. Ist er bereits selber klebend, so erübrigt sich die weitere Klebeschicht, ansonsten ist er mit einem Kleber 3 versehen. Auch hier können die Kleber der ersten und zweiten Träger 1', 2 gleich oder vorzugsweise unterschiedlich sein.

Der Abstand zwischen den zwei Trägern 1', 2 kann frei bleiben und durch den Basisträger 6 überbrückt sein. Er kann jedoch auch mit einem nicht klebenden Zwischenstreifen 7 ausgefüllt sein. Der Zwischenstreifen 7 ist vorzugsweise aus Kunststoff, Papier oder Aluminiumfolie gefertigt.

In Figur 6 ist ein weiteres Ausführungsbeispiel dargestellt. Auch hier weist der erste Längsstreifen 1 eine hohe Dehnbarkeit, insbesondere in Längsrichtung des Klebebandes, auf und der zweite Längsstreifen 2 ist kaum oder nicht dehnbar ausgebildet. Der Träger 1 des ersten Längsstreifens ist vorzugsweise aus Polyethylen (PE) gebildet und er verfügt über Dehnungsreserven. Insbesondere ist er gekreppt; das heisst, er weist in Querrichtung verlaufende Falten auf. Das Grundmaterial des ersten Trägers ist vorzugsweise auch ohne Dehnungsreserven hochdehnbar. Dies ist jedoch nicht zwingend notwendig. Auch hier können die Streifen aneinander angrenzen oder es kann wieder ein Zwischenbereich als klebefreie Zone ausgebildet sein.

Der Träger 2 des zweiten Längsstreifens ist wiederum aus Papier, Vlies oder Gewebe gebildet.

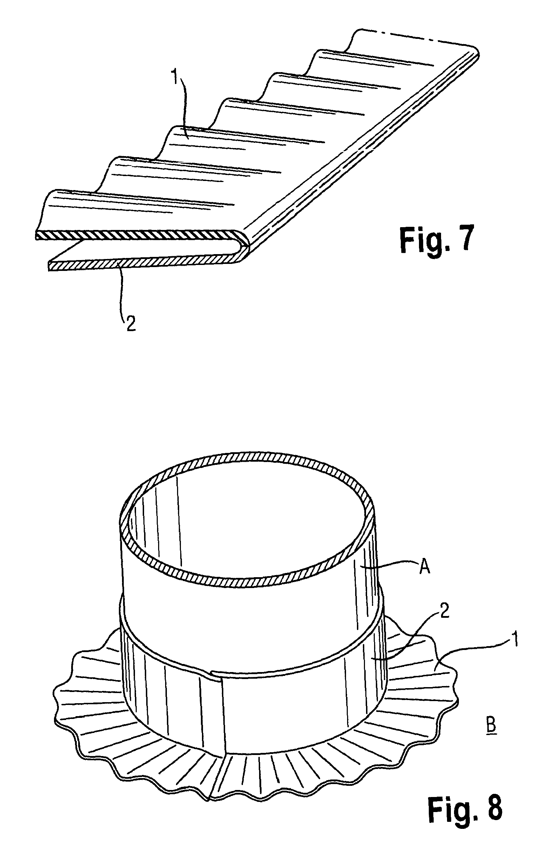

In Figur 7 ist das Klebeband im vorgefalteten Zustand dargestellt. Diese Faltung kann erst auf dem Bau erfolgen oder das Band kann schon in diesem Zustand aufgerollt sein.

Figur 8 zeigt wiederum eine Anwendung bei einer Durchdringung. Der nicht dehnbare Streifen 2 ist um ein Rohr gewickelt, bis es sich selber überlappt. Der gekreppte, dehnbare Streifen 1 wird fächerartig auf die Bodenplatte gelegt. Hier ist erkennbar, dass der nicht oder nur schwach dehnbare zweite Längsstreifen 2 die erhöhte Stabilität bei der Applikation der ersten Bandhälfte gewährleistet, so dass sichergestellt ist, dass das Band nicht bereits zu diesem Zeitpunkt überdehnt oder beschädigt wird. Die Dehnbarkeit des ersten Längsstreifens 1, hier insbesondere dank der Kreppung, ermöglicht ein einfaches Ablegen auf die Bodenplatte ohne Rückstellungsgefahr.

Das erfindungsgemässe Klebeband ist dank seinen zwei unterschiedlich dehnbaren Längsstreifen insbesondere für die Abklebung von Durchdringungen geeignet. Es gewährleistet eine hohe Dichtheit, es ist einfach montierbar und kostengünstig herstellbar.

### Bezugszeichenliste

- 1: erster Träger
- 1': erster selbstklebender Träger
- 2: zweiter Träger
- 3: Kleber
- 3': erster Kleber
- 3": zweiter Kleber
- 4: abziehbare Abdeckung
- 5: festklebende Abdeckung
- 6: Basisträger
- 7: nichtklebender Zwischenstreifen

- A: Rohr
- B: Platte

## Patentansprüche

1. Selbstklebendes Klebeband, insbesondere zum Verschliessen oder Abdichten von Spalten und Fugen, in Eckbereichen und bei Durchdringungen im Hausbau, wobei das Klebeband in mindestens zwei in Längsrichtung parallel zueinander verlaufende Längsstreifen (1, 2) unterteilt ist, wobei ein erster dieser Längsstreifen (1) eine grössere Dehnbarkeit mindestens in Längsrichtung des Klebebandes aufweist als ein zweiter dieser Längsstreifen (2) und der zweite Längsstreifen (2) nicht oder nur schwach dehnbar ausgebildet ist.

2. Klebeband nach Anspruch 1, wobei die zwei Längsstreifen (1, 2) teilweise überlappend, aneinander grenzend oder beabstandet zueinander verlaufen.

3. Klebeband nach einem der Ansprüche 1 bis 2, wobei der erste Längsstreifen einen ersten Träger (1) und der zweite Längsstreifen einen zweiten Träger (2) aufweist und dass die zwei Träger (1, 2) mindestens auf einer gemeinsamen Seite mit einem Kleber (3) versehen sind.

4. Klebeband nach Anspruch 3, wobei die zwei Träger (1, 2) überlappend angeordnet und im Überlappungsbereich miteinander verbunden, insbesondere verklebt oder verschweisst, sind.

5. Klebeband nach einem der Ansprüche 1 bis 4, wobei das Klebeband einen Kleber (3) aufweist, welcher in mindestens in einen ersten und einen zweiten, in Längsrichtung parallel zueinander und auf derselben Seite des Klebebandes verlaufende Längsklebestreifen (3', 3") unterteilt ist, wobei die zwei Längsklebestreifen (3', 3") unterschiedliche Klebereigenschaften aufweisen.

6. Klebeband nach einem der Ansprüche 1 bis 5, wobei auf einer klebenden Seite des Klebebandes ein Längsbereich (5, 7) des Klebebandes nicht klebend ausgebildet ist.

7. Klebeband nach Anspruch 6, wobei dieser nichtklebende Längsbereich (5, 7) ein mittlerer Bereich des Klebebandes ist, welcher auf seinen zwei Längskanten von je einem der zwei Längsstreifen flankiert ist.

8. Klebeband nach einem der vorhergehenden Ansprüche, wobei der erste Längsbereich Butyl aufweist.

9. Klebeband nach einem der vorhergehenden Ansprüche, wobei der zweite Längsbereich ein Vlies aufweist.

10. Klebeband nach einem der vorhergehenden Ansprüche, wobei der erste Längsbereich gekreppt ist.

11. Klebeband nach einem der vorhergehenden Ansprüche, wobei es einen sich über die gesamte Breite erstreckenden Basisträger (6) aufweist, wobei ein Längsstreifen auf diesem Basisträger mit dem ersten Träger (1) versehen und ein zweiter Längsstreifen mit dem zweiten Träger (2) versehen ist, wobei der erste Träger (1) und der Basisträger (6) eine grössere Dehnbarkeit aufweisen als der zweite Träger (2).

12. Klebeband nach einem der vorhergehenden Ansprüche, wobei die klebende Oberfläche des Klebebandes mit einer abziehbaren Schutzabdeckung (4) versehen ist, wobei diese Schutzabdeckung (4) vorzugsweise in Längsrichtung so unterteilt ist, dass der erste und zweite Längsbereich einzeln und unabhängig voneinander von dieser Schutzabdeckung (4) befreibar sind.
